Europäisches Patentamt

European Patent Office

Office européen des brevets

(19)

(11) Numéro de publication : **0 410 880 B1**

(12) # FASCICULE DE BREVET EUROPEEN

(45) Date de publication du fascicule du brevet :
**11.05.94 Bulletin 94/19**

(51) Int. Cl.$^5$ : **H01S 3/09**

(21) Numéro de dépôt : **90402138.3**

(22) Date de dépôt : **25.07.90**

(54) **Laser à électrons libres à accélérateur d'électrons perfectionné.**

(30) Priorité : **27.07.89 FR 8910144**

(43) Date de publication de la demande :
**30.01.91 Bulletin 91/05**

(45) Mention de la délivrance du brevet :
**11.05.94 Bulletin 94/19**

(84) Etats contractants désignés :
**DE GB**

(56) Documents cités :
**WO-A-88/09597**
**FR-A- 2 469 026**
**GB-A- 2 065 363**

(56) Documents cités :
**NUCLEAR INSTRUMENTS AND METHODS IN PHYSICS RESEARCH, vol. A250, nos. 1,2, septembre 1986, pages 278-282; C.-M. TANG et al.: "Proposal for FEL experiments driven by the national bureau of standards CW microtron"**

(73) Titulaire : **COMMISSARIAT A L'ENERGIE ATOMIQUE**
**31/33, rue de la Fédération**
**F-75015 Paris Cédex 15 (FR)**

(72) Inventeur : **Etievant, Claude**
**44 rue Saint Charles**
**F-78000 Versailles (FR)**

(74) Mandataire : **Mongrédien, André et al**
**c/o BREVATOME 25, rue de Ponthieu**
**F-75008 Paris (FR)**

EP 0 410 880 B1

## Description

La présente invention a pour objet un laser à électrons libres à accélérateur d'électrons perfectionné. Elle trouve une application dans la production de rayonnement cohérent dans une plage allant du submillimétrique au proche infrarouge.

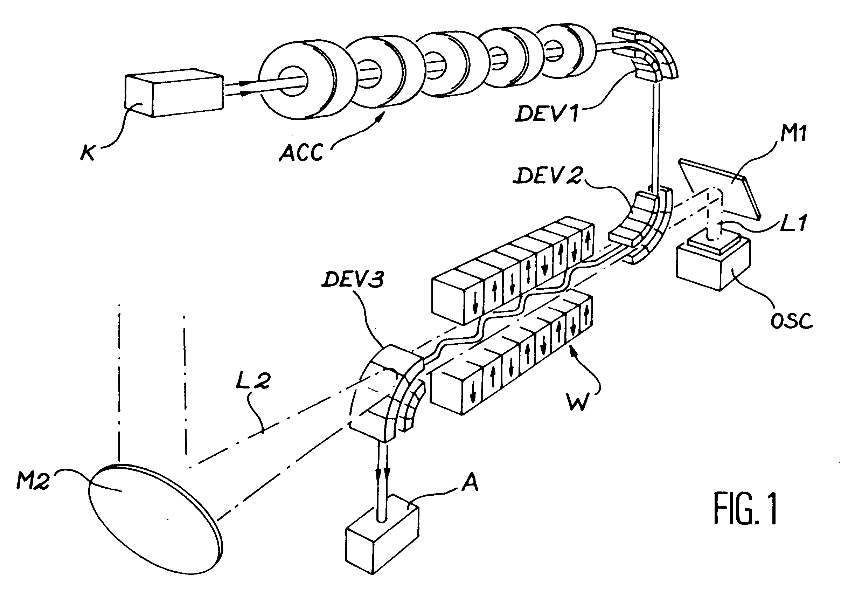

Un laser à électrons libres selon l'art antérieur est schématiquement représenté sur la figure 1. Il comprend une source d'électrons K, engendrant un faisceau d'électrons, une structure accélératrice ACC accélérant ce faisceau jusqu'à des vitesses relativistes, des déviateurs DEV1, DEV2 permettent d'introduire le faisceau accéléré dans une structure magnétique W dite onduleur (ou "wiggler" en terminologie anglo-saxonne) formée d'aimants périodiquement alternés. A l'intérieur de cet onduleur, le faisceau d'électrons subit une série de déflexions de sens alternés. A la sortie, le faisceau d'électrons est à nouveau défléchi par un déviateur DEV3 et finalement absorbé par un atténuateur A. Deux miroirs M1 et M2 encadrent l'onduleur.

Dans la variante représentée, un oscillateur OSC délivre un faisceau électromagnétique L1 qui traverse l'onduleur. Celui-ci est le siège d'une interaction entre le faisceau d'électrons et le faisceau électromagnétique. Si certaines conditions sont respectées, l'onde électromagnétique est amplifiée aux dépends de l'énergie du faisceau d'électrons. Un faisceau laser intense et cohérent L2 est émis et dirigé vers les moyens d'utilisation.

Une structure à électrons libres peut fonctionner également en oscillateur. Dans ce cas, les miroirs M1 et M2 sont parallèles et forment une cavité résonante. L'oscillateur OSC est naturellement absent dans ce cas.

Dans ce qui suit, le mot "laser" doit donc être pris aussi bien dans le sens d'amplificateur que d'oscillateur.

On peut trouver une description de ce dispositif dans le brevet des Etats-Unis d'Amérique US-A-3,882,410.

L'optimisation du fonctionnement d'un laser à électrons libres repose en partie sur les paramètres du faisceau d'électrons injecté dans l'onduleur. Parmi ces paramètres, on peut citer l'intensité du faisceau, l'énergie des électrons, la dispersion des vitesses, le diamètre du faisceau.

Dans les lasers à électrons libres construits jusqu'ici, on a utilisé diverses structures accélératrices comme :

- les accélérateurs linéaires, pour des énergies allant de 20 à 120 MeV,
- les accélérateurs linéaires à induction, de 0,5 à 5 Mev,
- les accélérateurs électrostatiques (type Van de Graf), de 3 à 6 MeV,
- les diodes alimentées par un générateur de Marx, de 0,15 à 1 MeV,
- les anneaux de stockage, de 150 à 540 MeV,
- les microtrons, de 100 à 150 MeV.

Dans le document GB-A-2 065 363, par exemple, il est fait usage d'un accélérateur linéaire (ou "linac" ou "catalac") tandis que, dans l'article intitulé "Proposal for FEL experiments driven by the National Bureau of Standard's CW microtron", il est fait usage d'un microtron.

Si ces accélérateurs conviennent à certains égards, ils présentent néanmoins des inconvénients. En particulier, leur complexité est telle qu'il est difficile de réaliser un laser de type industriel, c'est-à-dire présentant un encombrement réduit, un faible coût, et une bonne fiabilité. Par ailleurs, le rendement énergétique des accélérateurs classiques est modeste tandis que la dispersion en énergie des électrons accélérés est excessive. Le laser à électrons libres est donc resté jusqu'à ce jour essentiellement un outil de laboratoire.

Par ailleurs, les accélérateurs utilisés dans les deux derniers documents cités posent le problème de l'aiguillage du faisceau électronique. En effet, dans ces dispositifs, le faisceau d'électrons suit une portion de trajectoire commune dans l'accélérateur (que ce soit le linac ou le microtron) et doit parcourir des trajectoires différentes à l'extérieur. D'où la nécessité de dispositifs de mélange et de séparation des faisceaux électroniques.

La présente invention a justement pour but de remédier à ces inconvénients. A cette fin, elle propose d'appliquer au laser à électrons libres un accélérateur d'électrons particulier, en soi connu. Un tel accélérateur est particulièrement compact, souple d'emploi, simple de mise en oeuvre et économique. Il délivre un faisceau d'électrons intense avec une faible dispersion d'énergie, ce qui permet d'obtenir les conditions optimales d'interaction dans l'onduleur et augmenter ainsi le rendement du laser.

Par ailleurs, dans l'accélérateur utilisé selon l'invention, qui peut servir également de décélérateur, la trajectoire suivie par les électrons accélérés est distincte de celle suivie par les électrons décélérés, ce qui évite les "aiguillages" mentionnés plus haut.

Enfin, l'accélérateur préconisé par l'invention travaille à une fréquence plus faible que les autres accélérateurs mentionnés (le microtron travaille à 2380MHz, et le linac (ou catalac) à 358MHz) à comparer avec 180MHz pour l'accélérateur de l'invention. IL en résulte que la précision sur la longueur des trajectoires électroniques pour maintenir les conditions de phase dans l'accélération et la décélération, est beaucoup plus facile à satisfaire dans le cas de l'invention.

Selon la présente invention, l'accélérateur est une structure coaxiale à passages multiples que le demandeur a décrit et revendiqué dans sa demande de brevet français FR-A-2 616 032. Le domaine d'application de cet accélérateur était limité jusqu'à présent à l'irradiation de substances diverses telles que les produits agroalimentaires, soit directement par les électrons accélérés, soit par des rayons X obtenus par conversion sur une cible en métal lourd.

La structure accélératrice retenue selon l'invention, en plus des avantages soulignés plus haut, permet diverses variantes intéressantes. C'est ainsi que le laser peut comprendre un moyen de récupération de l'énergie résiduelle du faisceau d'électrons sortant de l'onduleur magnétique, ce moyen comprenant un décélérateur d'électrons constitué par une structure coaxiale à passages multiples analogues à ceux de l'accélérateur, le faisceau sortant de l'onduleur magnétique étant injecté dans ce décélérateur avec une condition de phase correspondant à une décélération.

Cette structure décélératrice peut être distincte de la structure accélératrice ou confondue avec celle-ci.

La structure accélératrice retenue selon l'invention permet également des modes de réalisation à anneau de stockage, l'onduleur étant placé dans l'un des bras de l'anneau.

Ces modes de réalisation sont très avantageux, car ils permettent d'accéder à des rendements très élevés. La cavité accélératrice, en régime établi, n'a pour rôle que de compenser l'énergie rayonnée par le faisceau d'électrons dans le laser.

Un tel dispositif est considéré comme difficile à réaliser dans le brevet GB-A-2 065 363 déjà cité (page 3, lignes 25 à 35) en raison de l'élargissement de la distribution de vitesses du faisceau d'électrons. Aussi, n'envisage-t-on même pas cette possibilité dans l'art antérieur.

L'utilisation de l'accélérateur coaxial selon l'invention permet de surmonter facilement cette difficulté car la cavité coaxiale, couplée à un anneau de stockage, possède une excellente stabilité longitudinale, qui se traduit par un regroupement en énergie des électrons dont la distribution a été élargie par l'interaction subie dans l'onduleur.

De toute façon, les caractéristiques et avantages de l'invention apparaîtront mieux à la lecture de la description qui va suivre. Cette description porte sur des exemples de réalisation donnés à titre explicatif et nullement limitatif et se réfère à des dessins annexés, sur lesquels :

- la figure 1, déjà décrite, montre schématiquement un laser à électrons libres selon l'art antérieur ;
- la figure 2 montre en coupe longitudinale une cavité coaxiale résonant selon le mode fondamental ;
- la figure 3 montre une structure accélératrice en coupe transversale ;
- la figure 4 illustre une première variante du laser à électrons libres selon l'invention, dite à faisceau perdu ;
- la figure 5 illustre une seconde variante à récupération d'énergie à deux structures, l'une accélératrice, l'autre décélératrice ;
- la figure 6 illustre un mode de réalisation avec récupération d'énergie mais à une seule structure accélératrice-décélératrice ;
- la figure 7 illustre un mode de réalisation avec récupération d'énergie à une seule structure accélératrice-décélératrice travaillant sur deux plans différents ;
- la figure 8 explicite une autre variante à anneau de stockage ;
- la figure 9 est un diagramme d'énergie pour une structure à anneau de stockage ;
- la figure 10 montre encore une autre variante à anneau de stockage entretenu par un accélérateur selon l'invention ;
- la figure 11 illustre un autre mode de réalisation à anneau de stockage entretenu par un accélérateur selon l'invention.

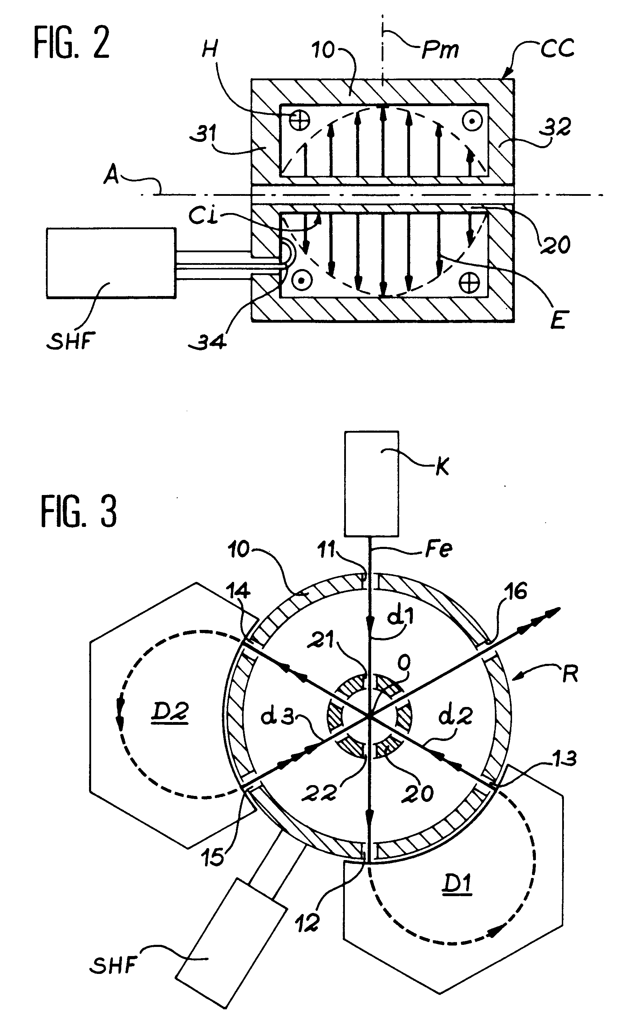

Les figures 2 et 3 permettent d'illustrer la structure et le fonctionnement de la structure accélératrice retenue par l'invention dans l'application aux lasers à électrons libres.

Sur la figure 2, on voit une cavité coaxiale CC constituée par un conducteur cylindrique extérieur 10, un conducteur cylindrique intérieur 20 et deux flasques 31 et 32. Une telle cavité possède un axe A et un plan médian Pm, perpendiculaire à l'axe. Parmi tous les modes de résonance possibles d'une telle cavité, il en est un, dit fondamental, de type transverse électrique, pour lequel le champ électrique E est purement radial dans le plan médian et décroît de part et d'autre de ce plan pour s'annuler sur les flasques 31, 32. Inversement, le champ magnétique est maximum le long des flasques et s'annule dans le plan médian en changeant de sens.

Dans ce mode de résonance, la hauteur de la cavité est égale à $\lambda/2$, si $\lambda$ est la longueur d'onde du champ électromagnétique établi dans la cavité.

Il existe d'autres modes de résonance, pour lesquels il existe non pas un mais $\underline{n}$ maxima de la composante radiale transverse ($n>1$). La hauteur de la cavité est alors égale à $n\lambda/2$. On peut avoir par exemple deux plans où la composante radiale du champ électrique est maximale, avec une cavité de hauteur $\lambda$, les deux plans étant distants de $\lambda/4$, des deux flasques.

La cavité CC est alimentée par une source haute fréquence SHF par une boucle 34.

Le faisceau d'électrons est injecté dans la cavité coaxiale dans un plan où le champ électrique radial est maximal. C'est en effet dans un tel plan qu'il n'existe aucun champ magnétique parasite susceptible de dévier le faisceau.

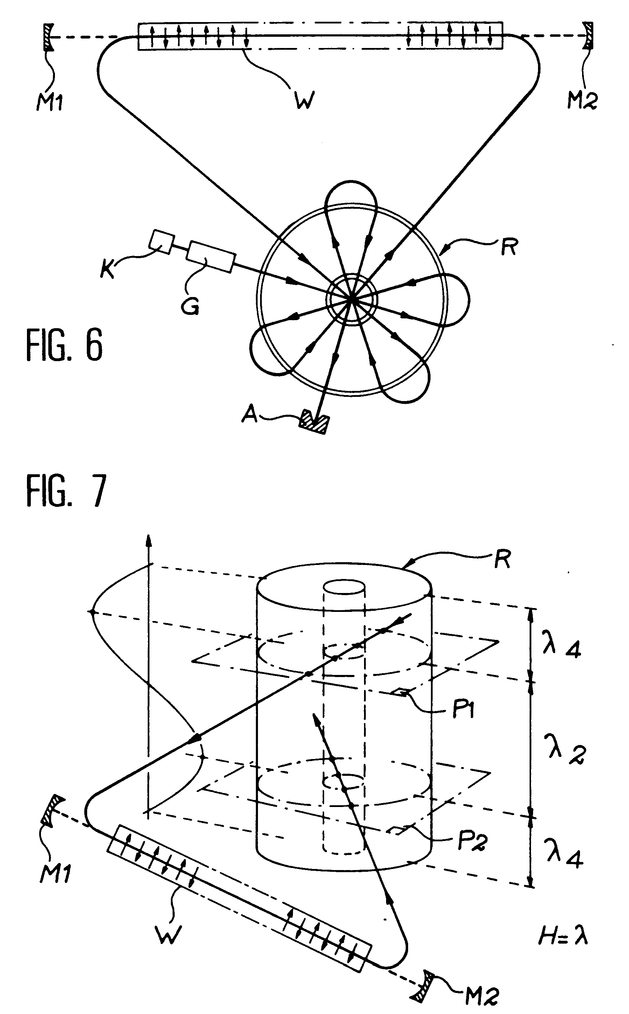

Dans le cas d'une cavité résonant en $\lambda/2$, comme illustré sur la figure 2, le faisceau est injecté dans le plan médian référencé Pm. Mais on verra, en liaison avec la figure 7, un cas où la cavité résonne en λ et où deux plans différents sont utilisés.

La figure 3 montre, de façon schématique, un accélérateur complet. On y retrouve la source haute fréquence SHF, la source d'électrons K, une cavité coaxiale CC, formée d'un conducteur cylindrique extérieur 10 et d'un conducteur cylindrique intérieur 20 et l'on voit en outre deux déflecteurs d'électrons D1 et D2.

Le fonctionnement de ce dispositif est le suivant. La source d'électrons K émet un faisceau d'électrons Fe dirigé dans un plan perpendiculaire à l'axe de la cavité coaxiale CC. Le faisceau pénètre dans la cavité par une ouverture 11. Il traverse la cavité selon un premier diamètre d1 du conducteur extérieur. Le conducteur intérieur 20 est percé de deux ouvertures 21 et 22, diamétralement opposées. Le faisceau d'électrons est accéléré par le champ électrique si les conditions de phase et de fréquence sont satisfaites (le champ électrique doit rester de sens opposé à la vitesse des électrons).

Le faisceau accéléré sort de la cavité par une ouverture 12 diamétralement opposée à l'ouverture 11. Il est ensuite défléchi par un déflecteur D1.

Le faisceau est réintroduit dans la cavité coaxiale par une ouverture 13. Il emprunte alors un second diamètre d2 et subit dans la cavité une seconde accélération. Il ressort par l'ouverture 14. A sa sortie, le faisceau est à nouveau défléchi par un déflecteur D2 puis réintroduit dans la cavité par une ouverture 15. Il emprunte un troisième diamètre d3 et subit une troisième accélération, etc...

Le caractère coaxial de la structure d'accélération entraîne que le champ électrique n'a pas la même direction dans la première et dans la seconde moitié du trajet emprunté par les électrons dans la cavité, autrement dit le long du rayon qui va du conducteur extérieur au conducteur intérieur, puis le long du rayon qui va du conducteur intérieur au conducteur extérieur. La variation spatiale du champ s'accompagne d'une variation temporelle puisque le champ possède une haute fréquence (quelques centaines de Mégahertz en pratique). Ces deux variations sont mises à profit en injectant le faisceau avec une condition de phase telle que le champ électrique s'annule au moment où les électrons traversent le conducteur central. Le temps mis par les électrons pour passer d'un conducteur à l'autre doit donc être inférieur à la demi-période du champ ; le temps mis par les électrons pour traverser la totalité de la cavité est donc inférieur à la période du champ. Comme les électrons sont animés de vitesses quasi-relativistes, on doit avoir $d2/c < T$, condition où c est la vitesse de la lumière. On peut réécrire cette condition sous la forme $d2 \leq \lambda$ où λ est la longueur d'onde du champ électromagnétique.

Si l'on désigne par <u>l</u> la longueur du trajet emprunté par les électrons en dehors de la cavité, notamment dans le déflecteur, on doit avoir une condition supplémentaire qui est :

$$d2 + l = k \qquad \text{où k est un entier.}$$

Il est souhaitable, pour réduire l'encombrement du dispositif, de prendre k=1. Mais dans certains cas particuliers, on pourrait être amené à choisir k=2.

Pour qu'il y ait accélération des électrons et non décélération, il faut injecter le faisceau à un instant déterminé du cycle du champ électromagnétique. En prenant pour phase de référence l'instant du cycle où le champ est maximum et en désignant par 0 le point du plan Pm situé sur l'axe A, la condition de phase impose que les électrons passent en 0 lorsque la phase du champ est égale à $3\pi/2$ (à $2k\pi$ près), ce qui conduit à une accélération sur le rayon qui précède (le champ est dirigé dans le sens opposé à la vitesse) et sur le rayon qui suit (où le champ, après s'être inversé, est encore opposé à la vitesse). En revanche, si les électrons passent en 0 lorsque la phase est égale à $\pi/2$ (à $2k\pi$ près), il y aura décélération tout au long de la traversée. Pour une phase égale à $\pi$, la traversée est neutre.

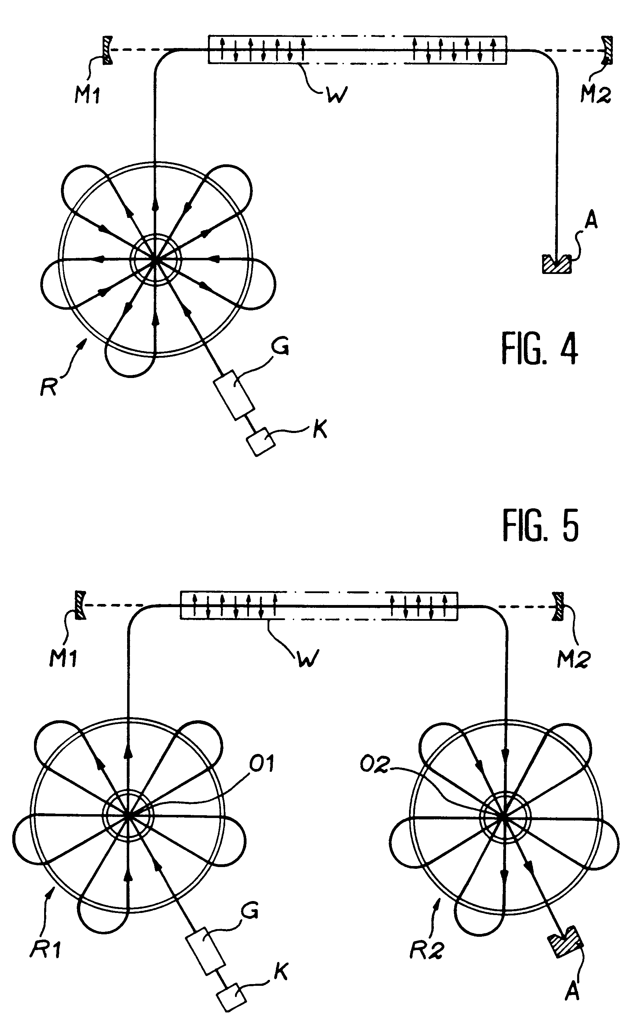

La figure 4 montre un laser à électrons libres selon l'invention dans une variante dite "à faisceau perdu". Tel que représenté, le dispositif comprend une source d'électrons K, éventuellement un groupeur G, une structure accélératrice R dans laquelle le faisceau est accéléré selon 6 diamètres différents, un onduleur W et un absorbeur d'électrons A. Deux miroirs M1 et M2 constituent une cavité résonante. Les déflecteurs de faisceau à l'entrée et à la sortie de l'onduleur ne sont pas représentés.

Une telle configuration présente plusieurs avantages : elle est bien adaptée à l'injection du faisceau dans une structure longue avec champ magnétique de guidage (axial ou hélicoïdal) ; elle possède une grande souplesse de fonctionnement et de réglage des différents paramètres ; elle est simple et de coût réduit.

Cette configuration présente des inconvénients liés au fait que l'énergie du faisceau de sortie est perdue, ce qui entraîne un rendement médiocre et une émission de rayonnement X. Par ailleurs, l'intensité du faisceau d'électrons est limitée.

Pour éviter ces inconvénients, l'invention prévoit des configurations à récupération d'énergie. Elles sont illustrées sur les figures 5 et 6.

Sur la figure 5 tout d'abord, l'installation comprend une seconde structure coaxiale R2, à passages multiples identique à la structure R1, mais fonctionnant en décélération.

Comme il a été expliqué plus haut, les électrons sont injectés dans la structure coaxiale R1 de manière qu'ils passent au centre 01 lorsque le champ a une phase égale à $3\pi/2 + (2k\pi)$.

Dans la structure coaxiale R2, ils doivent passer au centre 02 avec une phase égale à $\pi/2 + (2k'\pi)$.

Il est donc nécessaire que les deux cavités R1 et R2 soient alimentées en synchronisme de fréquence et de phase et que le déphasage du champ entre les instants où le faisceau passe une dernière fois par 01 et une première fois par 02 soit de

$$\frac{3\pi}{2} - \pi/2 = \pi$$

(à 2k"π près).

La longueur L du trajet parcouru par les électrons entre 01 et 02 à travers l'onduleur doit donc être telle que $2\pi F.L/v = (2k"+1)\pi$, où v est la vitesse des électrons, et F est la fréquence soit $L = v(2k"+1)/2F$.

Dans le mode de réalisation de la figure 6, c'est la même structure coaxiale R qui sert d'accélérateur et de décélérateur, ce double effet étant obtenu en jouant sur les instants d'injection des électrons dans la cavité : $3\pi/2$ (ou $-\pi/2$) pour l'accélération et $\pi/2$ pour la décélération. La longueur L de la boucle parcourue par les électrons reste définie par la relation précédente.

Naturellement, l'intérêt de récupérer l'énergie pour améliorer le rendement du laser n'est réel que si l'énergie du faisceau est élevée par rapport à l'énergie perdue par effet Joule dans les parois de la cavité coaxiale. C'est le cas des cavités à très haut coefficient de surtension, et notamment pour les cavités supraconductrices, qu'on pourra utiliser avantageusement dans l'invention.

Mais l'intérêt est certain dès lors qu'on se soucie de réduire le rayonnement X lié à l'absorption du faisceau électronique de sortie.

Dans la variante de la figure 5, il est nécessaire d'accorder les deux cavités en fréquence et de prévoir un couplage entre la cavité décélératrice et la cavité accélératrice pour réinjecter la puissance récupérée de la première vers la seconde. Mais ce couplage modifie les fréquences de résonance, l'ensemble des cavités couplées résonant alors sur deux fréquences écartées d'une quantité qui dépend du couplage. Pour ces raisons, on peut préférer la variante de la figure 6, à une seule cavité.

Un mode de réalisation possible à une cavité, travaillant à la fois en accélérateur et en décélérateur, est représenté sur la figure 7. La cavité coaxiale résonne en $\lambda$ et présente donc deux plans P1 et P2 pour lesquels le champ électrique est purement radial et d'amplitude maximale (ou, ce qui revient au même, deux plans où il n'existe aucun champ magnétique parasite déviateur). Ces plans sont situés à ± H/4 du plan médian si H désigne la hauteur de la cavité, égale à la longueur d'onde $\lambda$.

Le plan P1 est utilisé en accélération (une seule traversée est représentée mais en pratique, il peut y en avoir plusieurs), et le plan P2 en décélération, la différence étant obtenue comme déjà expliqué, en jouant sur l'instant d'introduction du faisceau par rapport à la phase du champ établi dans la cavité.

La solution de la figure 7 présente également l'avantage de réduire d'un facteur 2 les pertes par effet Joule.

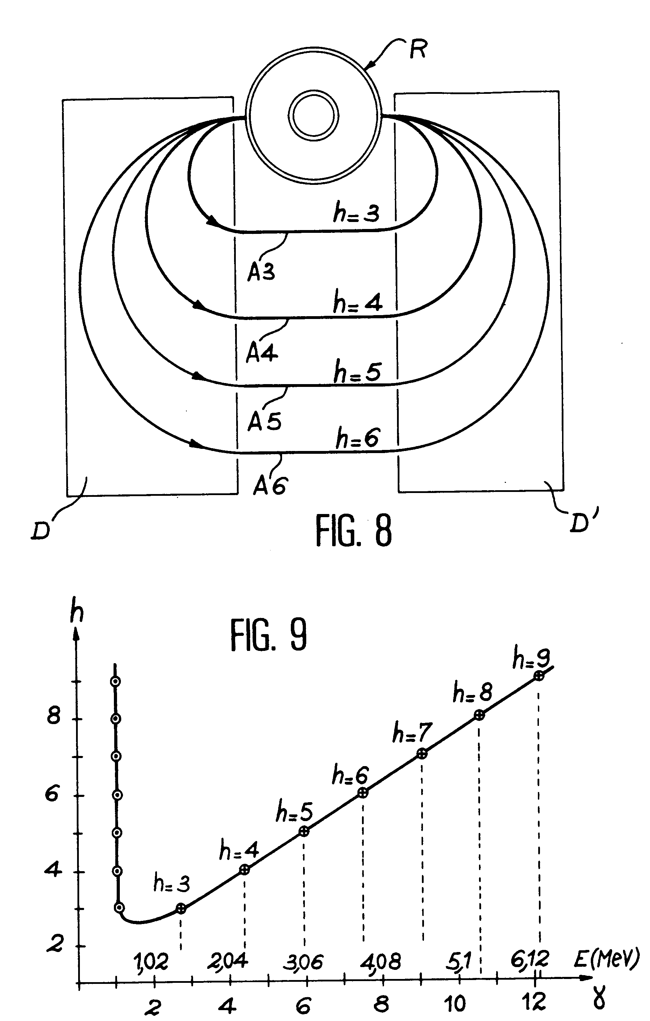

Selon un autre mode de réalisation prévu par l'invention, la structure coaxiale accélératrice peut être combinée avec un anneau de stockage de type connu, conformément à la figure 8. Sur cette figure, deux déflecteurs magnétiques D et D' imposent une induction et assurent la déflexion du faisceau d'électrons selon des trajectoires en arcs de cercle dont le rayon dépend de l'énergie des électrons. Ce rayon r est donné par

$$r = \frac{mv}{|q|B}$$

où m est la masse de l'électron (compte tenu des effets relativistes), q sa charge et B l'induction magnétique.

La longueur des deux trajectoires semi-circulaires est donc égale à

$$\frac{2\pi mv}{|q|B}$$

à laquelle il faut ajouter la longueur 2l des deux bras rectilignes soit

$$L = 2l + \frac{2\pi mv}{|q|B}$$

On peut définir des trajectoires "résonantes" lorsque la longueur L est un multiple de la longueur d'onde $\lambda$ du champ établi dans la cavité, soit $L = h\lambda$. Des électrons lancés sur une trajectoire résonante passeront au centre de la cavité à des instants correspondant toujours à la même phase du champ, c'est-à-dire, en pratique, à un déphasage égal à $\pi/2$, à un multiple de $2\pi$ près.

La figure 8 montre aussi quelques trajectoires résonantes pour h égal respectivement à 3, 4, 5 et 6.

Sur la figure 9 a été tracée une courbe où l'on voit le nombre h en ordonnées et, en abscisses l'énergie E (en MeV), ou, ce qui revient au même, un coefficient $\gamma$ égal à $m/m_o$ où $m_o$ est la masse au repos de l'électron et m la masse à sa vitesse réelle. La branche verticale correspond au cas où les effets relativistes sont négligeables ($\gamma = 1$) et la branche inclinée au cas où les effets relativistes sont dominants.

Cette courbe correspond au cas où la fréquence du champ est de 180 MHz, l'induction B de $10^{-2}$ Tesla et la longueur l des bras rectilignes de 1m.

Dans cette configuration, la cavité coaxiale accélératrice joue pleinement son rôle si l'accélération est telle que l'électron passe d'une orbite résonante d'ordre h à une orbite résonante d'ordre h' supérieure à h (par exemple h'=h+1). Cette condition peut être obtenue en jouant sur l'instant d'injection et sur l'amplitude du champ HF.

Dans certains cas, on pourra utiliser des trajectoires à énergie constante, la structure coaxiale n'accélérant ni ne décélérant les électrons la traversant. La condition sur l'injection du faisceau est que celui-ci passe au centre de la cavité lorsque le champ à une phase égale à ± π (ou 0). On obtient alors une trajectoire d'énergie stationnaire. On peut montrer que ces trajectoires sont stables pour une phase $\pm \pi$ (c'est-à-dire qu'une légère perturbation de la phase autour de $\pm \pi$ se traduit par un effet qui s'oppose à cette perturbation et ramène la phase à la phase correcte) et instable pour la phase 0.

De manière générale, la plage de phase dans laquelle la stabilité est assurée va de $\pi/2$ à $3\pi/2$, avec accélération au voisinage de $3\pi/2$ et décélération au voisinage de $\pi/2$. Comme l'énergie des électrons dépend de la phase à laquelle ils sont injectés, il correspond à cette plage de phase une plage d'énergie où la stabilité est assurée.

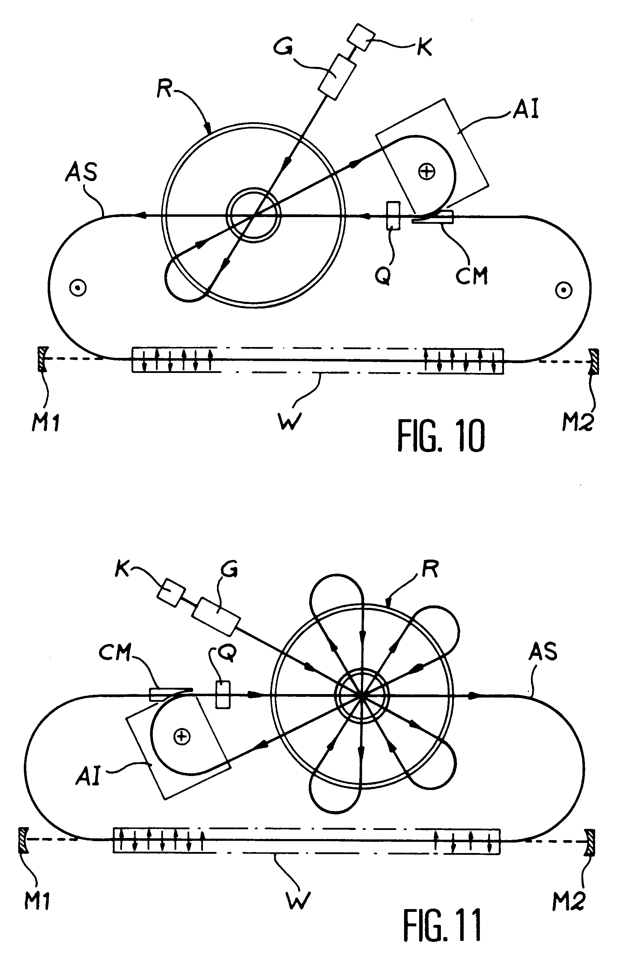

Les figures 10 et 11 montrent la structure complète d'un laser à électrons libres avec une source d'électrons K, un groupeur G, une cavité coaxiale d'accélération R, un aimant d'injection AI, un onduleur W, deux miroirs M1 et M2 et un conduit magnétique CM permettant l'injection dans l'anneau de stockage AS de manière tangentielle.

La figure 10 correspond au cas où sont effectués deux passages accélérateurs dans la cavité R et un passage neutre pour l'entretien sur l'anneau de stockage.

La figure 11 correspond à cinq passages accélérateurs et un passage neutre. Le nombre de passages accélérateurs dépend de l'énergie souhaitée pour le faisceau d'électrons afin de satisfaire aux conditions d'accord dans l'onduleur.

On peut ajouter au dispositif une lentille magnétique par exemple quadrupolaire Q, pour rattraper les écarts éventuels de trajectoires et faire converger les électrons vers le centre de la structure coaxiale R.

La réalisation des configurations en anneau de stockage des figures 10 et 11 est facilitée par l'utilisation d'un conduit magnétique CM permettant de protéger la trajectoire des électrons de l'anneau de stockage, vis-à-vis du champ magnétique déflecteur nécessaire pour courber le faisceau d'électrons injecté à la sortie des étages accélérateurs. Un tel conduit magnétique peut être réalisé soit par tube en matériau ferromagnétique canalisant le flux magnétique à l'intérieur du métal et laissant l'intensité du champ magnétique à une valeur très faible sur son axe, soit par un enroulement magnétique de compensation permettant d'annuler le champ magnétique sur le trajet du faisceau d'électrons de l'anneau de stockage.

Le mélange de la trajectoire électronique à la sortie des étages accélérateurs, avec la trajectoire électronique dans l'anneau de stockage est facilité par une propriété remarquable de l'accélérateur utilisé selon l'invention qui agit comme lentille convergente et permet de corriger les écarts angulaires qui pourraient subsister au niveau du mélange des trajectoires.

## Revendications

1. Laser à électrons libres comprenant une source d'électrons (K), un accélérateur d'électrons alimenté par cette source et fournissant un faisceau d'électrons, un onduleur magnétique (W) traversé par le faisceau d'électrons et des miroirs (M1, M2) de part et d'autre de l'onduleur, caractérisé par le fait que l'accélérateur d'électrons (R) est constitué par une structure coaxiale comprenant une cavité coaxiale (CC) formée d'un conducteur extérieur (10) et d'un conducteur intérieur (20), une source haute fréquence (SHF) alimentant la cavité (CC) en champ électromagnétique à une fréquence de résonance de la cavité, la composante radiale du champ (E) présentant un maximum dans au moins un plan (P) perpendiculaire à l'axe, les conducteurs extérieur (10) et intérieur (20) de la cavité (CC) étant percés d'ouvertures diamétralement opposées (11, 12, 13, 14, 15, 16) situées dans le plan (P) pour l'introduction du faisceau d'électrons dans la cavité et son extraction dans ce plan, l'accélérateur comprenant en outre au moins un déflecteur d'électrons (D1, D2) apte à dévier le faisceau ayant traversé la cavité selon un diamètre tout en le gardant dans le plan et à le réinjecter dans la cavité selon un autre diamètre.

2. Laser à électrons libres selon la revendication 1, caractérisé par le fait qu'il comprend un moyen de récupération de l'énergie résiduelle du faisceau d'électrons sortant de l'onduleur magnétique, ce moyen étant constitué par un décélérateur d'électrons (R, $R_2$) constitué par une structure coaxiale et des déflecteurs analogues à ceux de l'accélérateur, le faisceau sortant de l'onduleur magnétique étant injecté dans ce décélérateur avec une condition de phase correspondant à une décélération.

3. Laser à électrons libres selon la revendication 2, caractérisé par le fait que le décélérateur ($R_2$) est distinct de l'accélérateur (R).

4. Laser à électrons libres selon la revendication 2, caractérisé par le fait que le décélérateur est confondu avec l'accélérateur (R).

5. Laser à électrons libres, selon la revendication 4, caractérisé en ce que la cavité coaxiale (CC) est alimentée en champ électromagnétique à une fréquence correspondant à un mode de résonance présentant deux plans (P1, P2) où la composante radiale du champ électrique est maximale, la source d'électrons (K) délivrant un faisceau d'électrons injecté dans la cavité dans l'un de ces plans (P1) avec une condition de phase correspondant à des accélérations successives selon différents diamètres (d1, d2) tous situés dans ce plan, le faisceau d'électrons issu de l'onduleur (W) étant injecté dans la même cavité (CC) dans l'autre de ces plans (P2) avec une condition de phase correspondant à des décélérations 'successives.

6. Laser à électrons libres selon la revendication 1, caractérisé par le fait qu'il comprend un anneau de stockage des électrons entre une ouverture de sortie de la cavité coaxiale et une ouverture d'entrée de la cavité coaxiale, cet anneau comprenant deux branches rectilignes et deux branches en arcs de cercle, l'onduleur étant disposé sur l'une des branches rectilignes de l'anneau.

7. Laser à électrons libres selon la revendication 1, caractérisé par le fait que les électrons venant de l'anneau de stockage traversent la cavité (CC) avec une condition de phase correspondant à un régime neutre, sans accélération ni décélération.

**Patentansprüche**

1. Freielektronen-Laser, der eine Elektronenquelle (K), einen Elektronenbeschleuniger, der mit dieser Quelle gespeist wird und einen Elektronenstrahl aussendet, einen von dem Elektronenstrahl durchlaufenen Magnetwechselrichter (W) und Spiegel (M1, M2) beiderseits des Wechselrichters umfaßt,
**dadurch gekennzeichnet,**
daß der Elektronenbeschleuniger (R) aus einem koaxialen Gefüge gebildet wird, die einen koaxialen Hohlraum (CC) umfaßt, der aus einem äußeren Leiter (10) und einem inneren Leiter (20), einer Hochfrequenzquelle (SHF), welche den Hohlraum (CC) mit einem elektromagnetischen Feld bei einer Resonanzfrequenz des Hohlraums versorgt, gebildet wird, wobei der radiale Anteil des Feldes (E) ein Maximum in mindestens einer Ebene (P) senkrecht zur Achse aufweist, und die äußeren (10) und inneren (20) Leiter des Hohlraums (CC) von gegenüberliegenden diametralen, in der Ebene (P) angeordneten, Öffnungen (11, 12, 13, 14, 15, 16) durchbohrt sind, für die Einführung des Elektronenstrahls in den Hohlraum und sein Ausbringen in dieser Ebene, der Beschleuniger umfaßt außerdem mindestens einen Elektronendeflektor (D1, D2), der dazu fähig ist, den Strahl, welcher längs einem Durchmesser den Hohlraum durchlaufen hat, abzulenken, während er in der Ebene gehalten und längs einem anderen Durchmesser wieder in den Hohlraum eingeführt wird.

2. Freielektronen-Laser gemäß Anspruch 1, dadurch gekennzeichnet, daß er ein Gerät zur Rückgewinnung der Restenergie des, aus dem Megnetwechselrichter austretenden, Elektronenstrahls umfaßt, wobei dieses Gerät von einer Elektronenbremse (R, R2) gebildet wird, die aus einem koaxialen Gebilde und Deflektoren, analog zu denjenigen des Beschleunigers, gebildet wird, wobei der Strahl, welcher den Magnetwechselrichter verläßt, in diese Bremse eingeführt wird mit einem Phasenzustand, der einer Abbremsung entspricht.

3. Freielektronen-Laser gemäß Anspruch 2, dadurch gekennzeichnet, daß sich die Bremse (R2) von dem Beschleuniger (R) unterscheidet.

4. Freielektronen-Laser gemäß Anspruch 2, dadurch gekennzeichnet, daß die Bremse mit dem Beschleuniger (R) zusammengebaut ist.

5. Freielektronen-Laser gemäß Anspruch 4, dadurch gekennzeichnet, daß der koaxiale Hohlraum (CC) mit einem elektromagnetischen Feld gespeist wird, bei einer Frequenz, die einem Resonanzmodus entspricht, der zwei Ebenen (P1, P2) aufweist, bei denen der radiale Anteil des elektrischen Feldes maximal ist, wobei die Elektronenquelle (K) einen Elektronenstrahl liefert, der in den Hohlraum in eine dieser Ebenen (P1) eingeführt wird mit dem Phasenzustand, der den nachfolgenden Beschleunigungen entlang verschiedenen Durchmessern (d1, d2), die alle in dieser Ebene angeordnet sind, entspricht, wobei der von dem Wechselrichter (W) ausgestrahlte Elektronenstrahl in denselben Hohlraum (CC) in die andere dieser Ebenen (P2) eingeführt wird mit dem Phasenzustand, der den nachfolgenden Abbremsungen entspricht.

6. Freielektronen-Laser gemäß Anspruch 1, dadurch gekennzeichnet, daß er zwischen einer Ausgangsöffnung des koaxialen Hohlraums und einer Eingangsöffnung des koaxialen Hohlraums einen Elektronenspeicherring umfaßt, wobei dieser Ring zwei geradlinige Arme und zwei kreisbogenförmige Arme umfaßt, und der Wechselrichter auf einem der geradlinigen Arme des Rings angeordnet ist.

7. Freielektronen-Laser gemäß Anspruch 1, dadurch gekennzeichnet, daß die Elektronen, welche aus dem Speicherring kommen, den Hohlraum (CC) mit dem Phasenzustand durchlaufen, der einem neutralen, weder beschleunigenden noch abbremsenden Zustand entspricht.

**Claims**

1. Free electron laser incorporating an electron source (K), an electron accelerator supplied by said source and supplying an electron beam, a magnetic wiggler (W) traversed by the electron beam and mirrors (M1, M2) on either side of the wiggler, characterized in that the electron accelerator (R) is constituted by a coaxial structure having a coaxial cavity (CC) formed by an external conductor (10) and an internal conductor (20), a high frequency source (SHF) supplying the cavity (CC) with an electromagnetic field at the resonant frequency of the cavity, the radial component of the field (E) having a maximum in at least one plane (P) perpendicular to the axis, the external (10) and internal (20) conductors of the cavity (CC) having diametrically opposite openings (11, 12, 13, 14, 15, 16) located in the plane (P) for the introduction of the electron beam into the cavity and its extraction in said plane, the accelerator also having at least one electron deflector (D1, D2) able to deflect the beam which has traversed the cavity along a diameter, whilst keeping it in the plane and then reinjecting it into the cavity along another diameter.

2. Free electron laser according to claim 1, characterized in that it comprises a means for recovering the residual energy of the electron beam leaving the magnetic wiggler, said means being constituted by an electron decelerator (R, $R_2$) constituted by a coaxial structure and deflectors identical to those of the accelerator, the bean leaving the magnetic wiggler being injected into said decelerator with a phase condition corresponding to a deceleration.

3. Free electron laser according to claim 2, characterized in that the decelerator ($R_2$) is separate from the accelerator (R).

4. Free electron laser according to claim 2, characterized in that the decelerator coincides with the accelerator (R).

5. Free electron laser according to claim 4, characterized in that the coaxial cavity (CC) is supplied with an electromagnetic field at a frequency corresponding to a resonance mode having two planes (P1, P2), in which the radial component of the electric field is at a maximum, the electron source (K) supplying an electron beam injected into the cavity in one of these plane (P1) with a phase condition corresponding to successive accelerations according to different diameters (d1, d2) all located in said plane, the electron beam from the wiggler (W) being injected into the same cavity (CC) in the other of said planes (P2) with a phase condition corresponding to successive decelerations.

6. Free electron laser according to claim 1, characterized in that it comprises an electron storage ring between an outlet opening of the coaxial cavity and an inlet opening of the coaxial cavity, said ring having two rectilinear branches and two circular arc branches, the wiggler being located on one of the rectilinear branches of the ring.

7. Free electron laser according to claim 1, characterized in that the electrons from the storage ring traverse the cavity (CC) with a phase condition corresponding to a neutral state with neither acceleration nor deceleration.

FIG.1

# FIG. 2

# FIG. 3

M1

W

M2

A

FIG. 4

R

G

K

FIG. 5

M1

W

M2

O1

O2

R1

R2

G

K

A

FIG. 6

FIG. 7

FIG. 8

FIG. 9

FIG. 10

FIG. 11